## Europäisches Patentamt

## European Patent Office

## Office européen des brevets

(19)

(11) Veröffentlichungsnummer: **0 143 985**
**B1**

(12) # EUROPÄISCHE PATENTSCHRIFT

(45) Veröffentlichungstag der Patentschrift:
03.05.89

(51) Int. Cl.⁴: **A 61 C 1/08,** A 61 C 1/18

(21) Anmeldenummer: **84112954.7**

(22) Anmeldetag: **26.10.84**

(54) **Zahnärztliche Handstückanordnung mit Mitteln zur Lichtübertragung.**

**Teilanmeldung 88101629 eingereicht am 04.02.88.**

(30) Priorität: **02.11.83 DE 3339669**

(43) Veröffentlichungstag der Anmeldung:
**12.06.85 Patentblatt 85/24**

(45) Bekanntmachung des Hinweises auf die Patenterteilung:
**03.05.89 Patentblatt 89/18**

(84) Benannte Vertragsstaaten:
**AT CH DE FR IT LI**

(56) Entgegenhaltungen:
**EP-A- 0 075 096**
**DE-A- 1 766 056**
**DE-A- 2 758 806**
**DE-A- 3 215 219**
**US-A- 4 239 325**

(73) Patentinhaber: **Siemens Aktiengesellschaft Berlin und München, Wittelsbacherplatz 2, D-8000 München 2 (DE)**

(72) Erfinder: **Goisser, Siegfried, Dipl.-Ing., Ketteler Strasse 36, D-6141 Einhausen (DE)**
Erfinder: **Schuss, Werner, Dipl.-Ing., In der Lahrbach 18, D-6148 Heppenheim (DE)**
Erfinder: **Landgraf, Hermann, Donaustrasse 1, D-6148 Heppenheim (DE)**

## Beschreibung

Die Erfindung bezieht sich auf eine zahnärztliche Handstückanordnung mit einem an einem Versorgungsschlauch angeschlossenen ersten Handstückteil und einem demgegenüber um seine Längsachse frei, d. h. über 360°, drehbaren und von diesem leicht trennbaren zweiten Handstückteil, mit die freie Drehbarkeit des zweiten Handstückteils gewährleistenden Führungsgliedern, mit einer die Handstückteile im gekuppelten Zustand axial fixierenden Rasteinrichtung, mit einem koaxial zwischen den beiden Handstückteilen im gekuppelten Zustand der Handstückteile im Inneren des zweiten Handstückteils angeordnetem Aufnahmeteil für eine außermittig angeordnete Lampe, die zusammen mit einem korrespondierend dazu angeordneten, an das vordere Ende der Handstückanordnung führenden Lichtleiter eine Beleuchtungseinrichtung bildet, wobei zur Stromversorgung der Lampe am Aufnahmeteil und am demgegenüber ortsfesten ersten Handstückteil an miteinander korrespondierenden Flächen Kontaktmittel angeordnet sind, die in jeder Drehstellung der Teile eine Spannungsübertragung gewährleisten.

Bei einer bekannten solchen Handstückanordnung (DE-A-3 215 219) ist die Lampe in einem Aufnahmeteil gehalten, welches drehfest mit dem vorderen, dem Versorgungsschlauch abgewandten Handstückteil und um die Handstücklängsachse frei drehbar mit der Anschlußarmatur des Versorgungsschlauches verbunden ist. Im einen Ausführungsbeispiel enthält die Anschlußarmatur vom Versorgungsschlauch kommende Stromübertragungselemente in Form von Schleif- oder Ringkontakten, die mit der Lampe zugeordneten Gegenkontakten am Ansatzstück zusammenarbeiten.

Damit Lampe und ein das Licht im Handstück weiterführender Lichtleiter einander korrespondierend gegenüberstehen, ist bei dieser bekannten Anordnung zunächst die Zuordnung dieser Teile, d. h. die Positionierung von Lampe und Lichtleiter, gezielt vom Benutzer vorzunehmen. Danach sorgen zwischen Handstück und Ansatzstück stirnseitig vorgesehene Kugelrastungen dafür, daß diese Zuordnung erhalten, also das Ansatzstück mit dem Handstück drehfest verbunden bleibt.

Bei einer anderen Handstückanordnung (DE-A-3 132 995), bei der als Lichtzuführungselement eine Glühlampe bzw. ein von einer Glühlampe gespeister Lichtleiter im einen Handstückteil (Antriebsteil) vorgesehen ist, korrespondiert das Lichtzuführungselement im gekuppelten Zustand mit einem Lichtleiter, der sich in der Griffhülse bis zum Kopfteil des Handstückes erstreckt. Die Lichtübergabe erfolgt an der Kupplungsstelle durch gegeneinander verdrehbare Lichtübertragungselemente, z. B. in Form von Lichtleitringen, die im Falle einer Handstückanordnung mit zentrisch gelagerter Antriebswelle konzentrisch zu den Triebwellen angeordnet sind. Durch die Lichtleitringe ist in jeder Relativlage, die die zu kuppelnden Handstückteile beim Aufstecken einnehmen, sichergestellt, daß beim axialen Zusammenfügen der Teile eine Lichtübertragung gesichert ist.

Der im Anspruch 1 angegebenen Erfindung liegt die Aufgabe zugrunde, demgegenüber eine verbesserte Handstückanordnung anzugeben, bei der insbesondere das gezielte Zuordnen von Lampenaufnahmeteil und das diesem gegenüberliegende Handstückteil entfallen kann, so daß der Benutzer die miteinander zu verbindenden Handstückteile in der ihm bislang gewohnten Weise bloß axial miteinander zu kuppeln braucht, unabhängig davon, welche Relativstellung die Handstückteile und damit Lampe und Lichtleiter zueinander beim Aufstecken haben.

Vorteilhafte Ausgestaltungen und Weiterbildungen sind in den Unteransprüchen enthalten.

Mehrere Ausführungsbeispiele der Erfindung werden nachfolgend anhand der Zeichnung näher erläutert.

Es zeigen:

Figur 1 ein zahnärztliches Griffteil in schaubildlicher Darstellung,

Figur 2 das Antriebsteil für das in Figur 1 dargestellte Griffteil in schaubildlicher Darstellung,

Figur 3 einen Ausschnitt vom Griffteil, teilweise geschnitten, in schaubildlicher Darstellung,

Figur 4 das Antriebsteil mit abgenommenem Aufnahmeteil für den Lichterzeuger,

Figur 5 das Aufnahmeteil für den Lichterzeuger,

Figur 6 das Antriebsteil nach Figur 2 im Längsschnitt,

Figur 7 einen Schnitt entlang der Linie VII–VII in Figur 6,

Figur 8 die elektrische Kontaktübertragung mittels Schleifringe in schaubildlicher Darstellung,

Figuren 9 und 10 eine andere Ausführung einer Kontaktübertragung einerseits in einer Längsschnittdarstellung und andererseits in schaubildlicher Darstellung,

Figuren 11 bis 13 eine andere Ausführung einer Schleifring-Kontaktübertragung in verschiedenen Schnitten dargestellt,

Figuren 14 und 15 eine andere Ausführung einer Handstückanordnung in schaubildlicher Darstellung,

Figuren 16 bis 18 die Abwicklung von drei verschiedenen Ausführungsformen der Gleitflächen jeweils für beide Kupplungsteile.

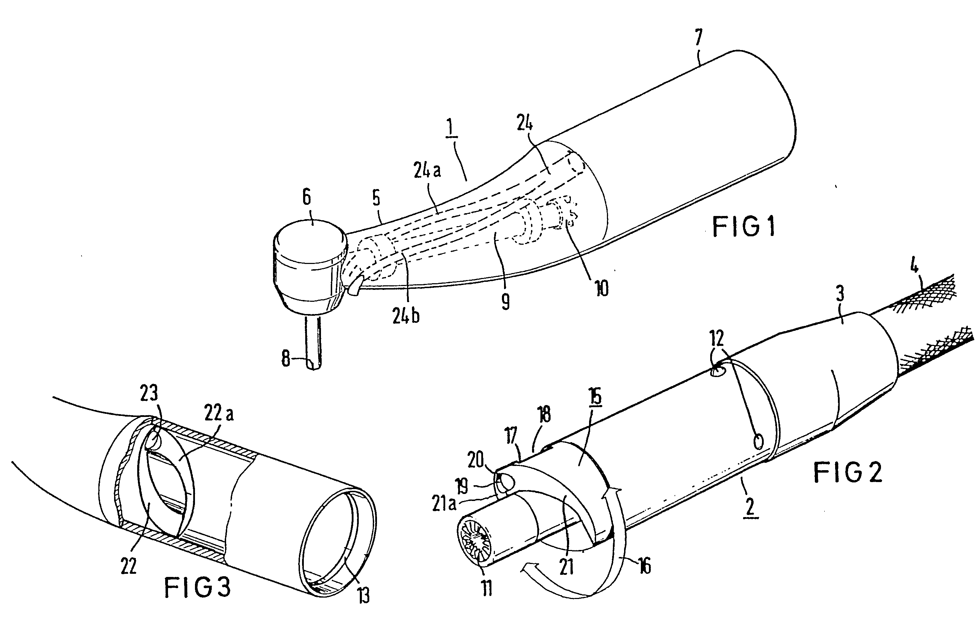

Die Figuren 1 und 2 zeigen in einer schaubildlichen Darstellung eine zahnärztliche Handstückanordnung, bestehend aus einem in Figur 1 dargestellten Griffteil 1 und einem in Figur 2 dargestellten Antriebsteil 2, an dessen rückwärtigem Ende mittels einer Anschlußarmatur 3 ein Versorgungsschlauch 4 angeschlossen ist.

Das Griffteil 1 enthält ein Halsteil 5 mit einem Kopfgehäuse 6 am einen Ende und einer Hülse 7 am anderen Ende. Im Kopfgehäuse 6 ist in bekannter Weise ein Werkzeug 8 rotierend gelagert, welches von einem im Antriebsteil 2 angeordneten Elektromotor angetrieben wird. Zur Drehmomentübertragung ist im Halsteil 5 eine Triebwelle 9 gelagert, welche dem Antriebsteil 2 zugewandt eine Verzahnung 10 aufweist, die im gekuppelten Zustand mit einer Verzahnung 11 der Motorwelle in Eingriff kommt. Zur Rastung des Griffteils 1 mit dem Antriebsteil 2 sind an letzterem mehrere, am Umfang verteilt angeordnete Rastkugeln 12 vorgesehen, die im gekuppelten Zustand mit einer in Figur 3 mit 13 bezeichneten Ringnut rastend eingreifen und so das Griffteil gegen axiales Abgleiten halten.

Mit 15 ist ein Teil bezeichnet, welches, wie durch den Pfeil 16 angedeutet, relativ zum Antriebsteil 2 gedreht werden kann. Das Teil 5 enthält eine radiale Ausnehmung 17 zur Aufnahme einer Glühlampe 18 als lichtzuführendes Element und stirnseitig eine Lichtaustrittsöffnung 19. Weiterhin enthält das Lampenaufnahmeteil 15, ausgehend von einer Kante 20, beidseitig schraubenförmig verlaufende Gleitflächen 21, 21a mit senkrecht zur Drehachse sich erstreckenden Flanken. Die Gleitflächen 21, 21a kommen im gekuppelten Zustand von Griffteil 1 und Antriebsteil 2 formschlüssig mit entsprechend ausgebildeten Gegenflächen 22, 22a des Griffteils 1 in Eingriff. Im gekuppelten Zustand stehen sich Lichtaustrittsöffnung 19 und das Ende 23 eines im Halsteil 5 angeordneten Lichtleiters 24 korrespondierend gegenüber. Der Lichtleiter 24 teilt sich im Bereich des Halsteiles 5 auf in zwei Abschnitte 24a, 24b, deren Enden im Bereich des Kopfgehäuses 6 in einer zur Beleuchtung der Präparationsstelle geeigneten Stellung ausgerichtet sind.

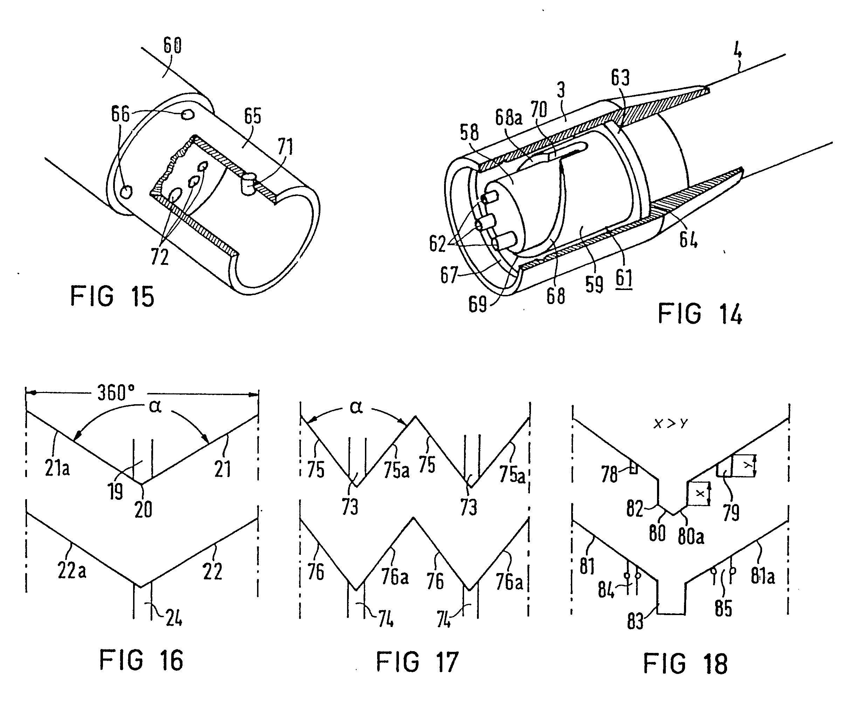

Beim axialen Ankuppeln von Griff- und Antriebsteil kommt, unabhängig davon, in welcher Relativlage sich das Lampenaufnahmeteil 15 gerade befindet, zunächst die vorderste Kante 20, die Scheitellinie der beiden Gleitflächen 21, 21a, mit einer der zugehörigen Flächen 21 oder 21a an einer der beiden Gegenflächen 22, 22a zur Anlage. Bei weiterem axialen Zusammenfügen der Teile gleiten die Flächen so lange an den Flächen 22 bzw. 22a entlang, bis die Flächen 21, 22 und 21a, 22a vollständig aneinander anliegen. In dieser Stellung sind Lampe 18 bzw. Lichtaustrittsöffnung 19 und Lichtleiter 24 bzw. Lichtübernahmestelle 23 exakt zueinander positioniert (sh. auch spätere Erläuterungen der Ablaufkurven gemäß Figur 16).

Die Zuführung der elektrischen Spannung erfolgt, wie in den nachfolgenden Figuren aufgezeigt, über Schleifringe, wodurch eine Kontaktierung über den gesamten Drehbereich gegeben ist.

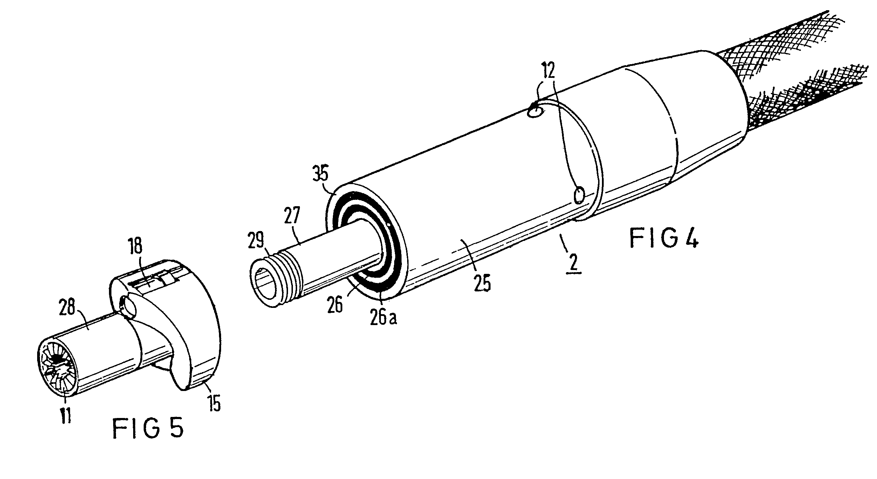

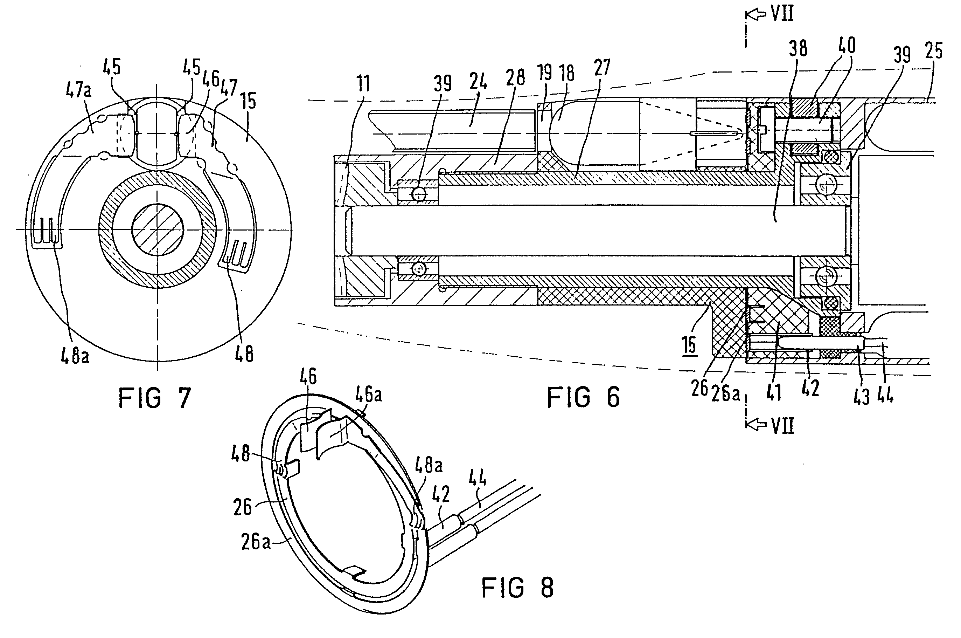

Die Figur 4 zeigt das Antriebsteil 2 alleine ohne Aufnahmeteil 15. Das Motorgehäuse 25 des Antriebsteils 2 enthält stirnseitig und praktisch in einer Ebene liegend zwei konzentrisch angeordnete Schleifringe 26, 26a, an die Spannungspotential für die im Lampenaufnahmeteil 15 gehaltene Glühlampe 18 (Figur 5) zugeführt wird. Zu den Schleifringen 26, 26a passende, die Spannung an die Lampe 18 weitergebende Kontaktfahnen sind in den nachfolgenden Figuren dargestellt. Das Lampenaufnahmeteil 15 wird im montierten Zustand auf einen mit 27 bezeichneten, die Antriebswelle umgebenden rohrförmigen Stutzen des Antriebsteils 2 aufgeschoben und mittels einer Schraubhülse 28 am Stutzen 27 mit einem die freie Drehbarkeit gewährleistenden Spiel axial fixiert, wozu am Stutzen 27 ein Gewinde 29 vorhanden ist. Die mit der Stirnverzahnung 11 verbundene Antriebswelle ist der besseren Darstellung wegen in diesen Figuren nicht dargestellt.

Die Lage der Lampe und deren elektrische Kontaktierung wird anhand der nachfolgenden Figuren näher erläutert.

Die Figuren 6 bis 8 lassen den Aufbau des Antriebsteils 2 mit dem Lampenaufnahmeteil 15 sowie die Kontaktierung der Lampe 18 erkennen.

Die Antriebswelle 38 des Elektromotors, an deren Ende sich die Stirnverzahnung 11 befindet, ist in bekannter Weise in Lagern 39 gelagert und vom Rohrstutzen 27 umgeben, der mit einem nicht näher bezeichneten Flansch durch Befestigungsmittel 40 stirnseitig am Motorgehäuse 25 gehalten ist. Mit 41 ist ein Trägerteil aus Kunststoff bezeichnet, an dem die in Figur 8 schaubildlich dargestellten Schleifringe 26, 26a z. B. durch Einpressen befestigt sind. Die Verbindung der Schleifringe 26 mit den zugehörigen elektrischen Zuführungsleitungen erfolgt mittels einer Steckverbindung, bestehend aus geschlitzten (federnden) Buchsen 42, welche an den Schleifringen 26 befestigt sind und in diese eingreifende Steckstifte 43, an denen die elektrischen Zuleitungen 44 befestigt sind. Das Trägerteil 41 ist axial abnehmbar am Flansch der Hülse 27 und damit am Motorgehäuse gehalten.

Die Lampe 18, welche über die radiale Ausnehmung 17 im Lampenaufnahmeteil 15 eingelegt werden kann, enthält (sh. Figur 7) parallele Schlüsselflächen 45, die entsprechende Kontaktflächen für die Lampenpole enthalten, an denen die einen Enden 46, 46a von Kontaktfahnen 47, 47a anliegen, deren andere Enden 48, 48a im montierten Zustand an den Schleifringen 26, 26a anliegen. Die Kontaktfahnen 47, 47a sind jeweils einstückig, d. h. es besteht eine direkte Kontaktierung von den Schleifringen zur Lampe.

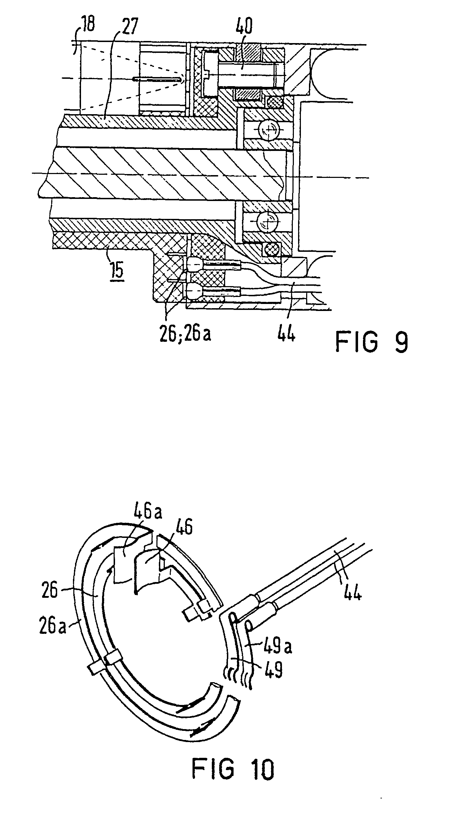

Die Figuren 9 und 10 zeigen eine andere Ausführungsform der Kontaktübertragung. Hier sind die Schleifringe dem Lampenaufnahmeteil 15 zugeordnet; die einen Kontaktenden 46, 46a, welche die Lampe 18 aufnehmen, sind also direkt mit den Schleifringen 26, 26a verbunden; die Stromzuführung von den elektrischen Leitungen 44 aus erfolgt hier mittels abgewinkelter, ebenfalls federnd an den Schleifringen 26, 26a anliegender Kontaktarme 49, 49a.

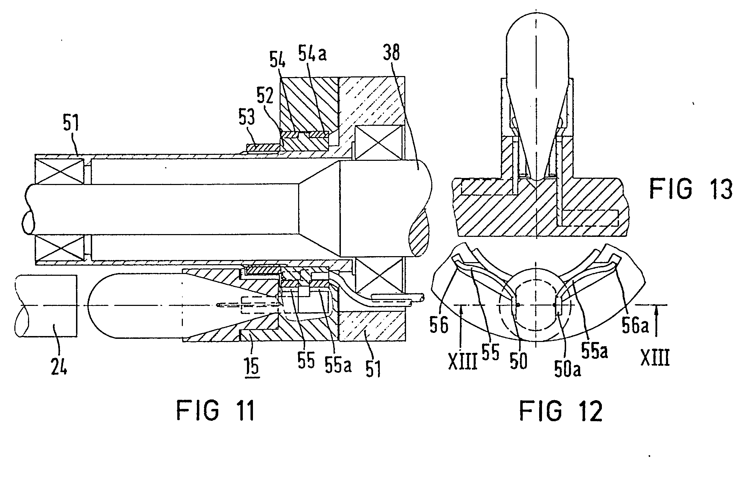

Die Figuren 11 bis 13 zeigen eine Ausführungsform, bei der die Schleifringe nicht konzentrisch in einer senkrechten Ebene angeordnet sind, sondern axial hintereinander am Umfang eines entsprechend ausgebildeten Trägerteils. In Betrachtung der Längsschnittdarstellung nach Figur 11 ist an der die Antriebswelle 38 umgebenden, einen Flansch bildenden Hülse 51 ein Kunststoffträgerteil 52 mittels eines Gewinderinges 53 axial (unverdrehbar) befestigt. Am Umfang des einen Isolierkörper bildenden Trägerteils 52 sind zwei hintereinander angeordnete Schleifringe 54, 54a befestigt, an denen (sh. Figur 12) Kontaktfahnen 55, 55a federnd anliegen. Die Kontaktfahnen 55, 55a liegen mit ihren einen Enden 50, 50a direkt am Lampensockel an und sind mit ihren anderen Enden 56, 56a in einer entsprechend ausgebildeten Nut des Trägerteils 52 federnd abgestützt.

Die Figuren 14 und 15 zeigen eine Möglichkeit einer Positionierung und Zentrierung der miteinander zu kuppelnden Teile auf, bei der, im Gegensatz zu den zuvor beschriebenen Lösungen, die Medien übertragenden Glieder und Gegenglieder im gekuppelten Zustand der Handstückteile nicht bloß korrespondierend einander gegenüberstehen, sondern axial ineinandergreifen. Bei der in den Figuren 14 und 15 dargestellten Variante werden zwei fluide Medien (z. B. Luft, Wasser) und Licht übertragen. Die Medienübertragung soll als weitere Variante im Rahmen der Erfindung nicht vom Antriebsteil zum Griffteil, sondern vom Anschlußteil 3 für den Versorgungsschlauch 4 zu einem mit 60 bezeichneten, die Medien weiterführenden Handstückteil beschrieben werden. Dieses Handstückteil 60 kann entweder dem in den Figuren zuvor beschriebenen Antriebsteil entsprechen oder beispielsweise auch ein Turbinen- oder anderes Handstück sein.

Die zwei Medien sind vom Versorgungsschlauch 4 kommend an ein mit 61 bezeichnetes Aufnahmeteil herangeführt, welches stirnseitig vorstehende Anschlußstutzen 62 aufweist. Das Aufnahmeteil 61 ist, ähnlich dem Lampenaufnahmeteil 15, gegenüber dem Versorgungsschlauch 4 und der fest mit diesem verbundenen Anschlußarmatur 3 frei drehbar gehalten, wozu am Aufnahmeteil 61 ein Bund 63 vorgesehen ist, der an einer Anlagefläche 64 der Anschlußarmatur 3 anliegt. Das die Anschlußstutzen 62 stirnseitig aufnehmende Teil 61 ist im wesentlichen zylindrisch ausgebildet und im Außendurchmesser dem Innendurchmesser der Anschlußhülse 65 des Handstückteils 60 angepaßt, deren Außendurchmesser wiederum dem Innendurchmesser der Anschlußarmatur 3 entspricht, so daß bei axialem Zusammenfügen der Teile 3 und 60 einerseits die Anschlußhülse 65 das Aufnahmeteil 61 teleskopartig übergreift, andererseits die Anschlußarmatur 3 die Anschlußhülse 65 übergreift. Zur axialen Fixierung im gekuppelten Zustand sind an der Anschlußhülse 65 Rastkugeln 66 vorgesehen, die, wie bei den Ausführungen zuvor beschrieben, in eine entsprechende Ringnut 67 in der Anschlußarmatur 3 eingreifen.

Die Medienübergabe erfolgt in diesem Falle, wie beispielsweise in der DE-OS-2 855 719 dargestellt, mittels einer Zapfen-/Hülsenverbindung mit axial hintereinander angeordneten Medienkanälen, die voneinander mittels O-Ringen drehbar abgedichtet sind.

Das Aufnahmeteil 61 enthält stirnseitig Gleitflächen 68, 68a, die sich von einer Kante 69 (Scheitellinie) aus nach Art einer Schraubenlinie erstrecken und in einer Längsnut 70 ausmünden. Am Gegenstück, der Anschlußhülse 65 des Handstückteils 60, ist ein Führungszapfen 71 so befestigt, daß er unabhängig von der Stellung des Aufnahmeteils 61 beim axialen Zusammenfügen der Teile 60 und 3 an einer der beiden Gleitflächen 68, 68a zur Anlage kommt. Bei weiterem axialen Zusammenfügen wird infolge der schraubenförmigen Wendelung der Gleitflächen 68, 68a das Aufnahmeteil 61 so weit gedreht, bis der Zapfen 71 in die Längsnut 70 einleitet. An dieser Stelle stehen die drei Rohrstutzen 62 im Handstückteil 60 angeordneten Buchsen 72 korrespondierend gegenüber. Werden die Handstückteile axial weiter zusammengefügt, bewegt sich der Zapfen 71 in der Längsnut 70. Durch diesen axialen weiteren Hub werden die Stutzen 62 in die Buchsen 72 eingeführt. Das Aufnahmeteil 61 kann vorzugsweise aus zwei Teilen gebildet sein, einem ersten zylindrischen, die Rohrstutzen 62 aufnehmenden Körper 58 und einer darauf aufgesetzten, die Gleitflächen beinhaltenden Hülse 59.

Der Bewegungsverlauf zur Positionierung wird anhand der Beispiele gemäß Figuren 16 bis 18 deutlich. Diese Figuren zeigen jeweils die Abwicklung der Gleitflächen über den gesamten Winkelbereich von 360°. Aus der Darstellung in Figur 18 geht hervor, daß im Falle des Beispiels gemäß den Figuren 1 bis 3 sich die Lichtaustrittsstelle 19 in der Scheitellinie 20 befindet und korrespondierend dazu im anderen Handstückteil, ebenfalls in der Scheitellinie der Gleitflächen 22, 22a, die Übernahmestelle 23 für den Lichtleiter 24 angeordnet ist. Aus der Darstellung ist entnehmbar, daß, unabhängig, in welcher Relativlage die Flächen 21, 21a und 22, 22a beim Ankuppeln der Teile zueinander stehen, durch axiales Annähern der beiden Teile mit den Gleitflächen ein zwangsläufiges Verdrehen des einen Teils (Aufnahmeteil 15 in Figur 2 bzw. 61 in Figur 14) erfolgt, wodurch die Medienübergabestellen in der Endlage zueinander positioniert werden.

Die Gleitflächen 21, 22 brauchen nur bei einem Handstückteil über den vollen Winkelbereich vorhanden zu sein; beim anderen Handstückteil genügt es, wenn die Gleitfläche nur im vordersten Bereich, also im Bereich um die Scheitellinie 20, vorhanden ist bzw. wenn, wie bei der Ausführung nach Figuren 14 und 15, lediglich ein Führungsglied (Position 71) vorhanden ist.

In der Ausführungsform gemäß Figur 17 sind zwei Licht zuführende Elemente mit Lichtaustrittsstellen 73 und, diesen entsprechend, zwei Lichtübernahmestellen 74 vorgesehen. An beiden Handstückteilen sind pro 180 Winkelgrade jeweils zwei Gleitflächen 75, 75a vorgesehen, die im gekuppelten Zustand mit entsprechenden Gegenflächen 76, 76a am anderen Teil zur Anlage kommen. Durch die Aufteilung der Gleitflächen in zwei mal 180° ergibt sich bei gleicher Baulänge ein steilerer Keilwinkel α, wodurch ein geringerer Kraftaufwand und damit eine leichtgängigere Verdrehung der Teile gewährleistet ist. Eine Verkürzung der Baulänge läßt sich erzielen, wenn man bei dieser doppelten Anordnung den Keilwinkel α relativ groß wählt, z. B. wie beim Ausführungsbeispiel nach Figur 16.

Die aufgezeigte Version mit doppelter Medienübertragung hat insbesondere bei Lichtübertragung den Vorteil, daß bei Ausfall einer Lampe noch eine Lichtquelle vorhanden ist bzw. daß die Beleuchtungsstärke doppelt so hoch sein kann wie bei einer Ausführung mit nur einer Lampe.

Bei der Ausführungsform gemäß Abwicklung nach Figur 18 sind die Anschlußglieder 78, 79 für die Medienübertragung nicht in Gleitflächen angeordnet; sie liegen vielmehr um das Maß (x) zurückgesetzt gegenüber Gleitflächen 80, 80a, die mit Gegenflächen 81, 81a am anderen Handstückteil korrespondieren. Die Gleitflächen 80, 80a erstrecken sich nur über einen Teil des Umfanges, dessen anderer, sich zu 360° ergänzender Teil durch die Flächen 81, 81a des anderen Teils repräsentiert wird. Während des Ankopplungsvorganges gleiten die Flächen 80 oder 80a entlang der Gegenflächen 81 bzw. 81a. Beim Erreichen der Position, bei der die Kante 82 in die Führung 83 eintritt, sind die Anschlußglieder 78, 79 zu den Gegengliedern 84, 85 im anderen Handstückteil positioniert. Dadurch, daß die einander gegenüberliegenden Gleitflächen zusammen einen Winkelbereich von geringfügig weniger als 360° überdecken, kann nunmehr ein axialer Hub, der das Ineinandergreifen der Anschlußglieder 78, 79 in die korrespondierenden Gegenglieder 84, 85 bewirkt, erfolgen. Damit die vorstehenden Anschlußglieder 78, 79 mit ihren Dichtflächen nicht beschädigt werden, enthält das die Gleitflächen 80, 80a enthaltende Führungsteil 86 eine Länge (x), die geringfügig größer ist als die Länge (y) der vorstehenden Anschlußglieder 78, 79.

Bei den bisher beschriebenen Beispielen sind die Gleitflächen jeweils winkelsymmetrisch angeordnet, d. h. beide Gleitflächen verlaufen, ausgehend von der Scheitellinie, symmetrisch zur Achse. Dies hat den Vorteil, daß die Baulänge sowie der Drehwinkel am günstigsten sind. Denkbar, und im Rahmen der Erfindung liegt es auch, die Gleitflächen asymmetrisch anzuordnen oder auch nur eine Gleitfläche über den gesamten Umfang vorzusehen, die dann jedoch durch eine achsparallele Fläche begrenzt ist. In dieser Begrenzungsfläche können dann vorteilhafterweise die Medien übertragenden Kupplungsglieder und Gegenglieder angeordnet sein. Deren Achsen verlaufen dann einerseits parallel zur Gleitfläche, andererseits um den Mittelpunkt des die Gleitfläche tragenden Aufnahmeteils. Sofern die Medien übertragenden Kupplungsglieder ineinandergreifen sollen, muß die Gleitfläche um einen der Eingriffslänge entsprechenden Betrag verlängert werden, d. h. das Ankoppelstück bestreicht im Extremfall einen größeren Drehwinkel als 360°.

Um eine räumliche Medientrennung von z. B. wasser- und stromführenden Teilen zu erzielen, ist es vorteilhaft, mehrere, im Durchmesser abgestufte, Medien führende Kupplungsglieder aufnehmende Körper 15 axial hintereinander anzuordnen, die, dem anzukuppelnden Teil 1 zugewandt, jeweils die Positionierungsmittel 21 tragen. ·

## Patentansprüche

1. Zahnärztliche Handstückanordnung mit einem an einem Versorgungsschlauch (4) angeschlossenen ersten Handstückteil (2) und einem demgegenüber um seine Längsachse frei, d. h. über 360° drehbaren und von diesem leicht trennbaren zweiten Handstückteil (1), mit die freie Drehbarkeit des zweiten Handstückteils (1) gewährleistenden Führungsgliedern (7, 25), mit einer die Handstückteile im gekuppelten Zustand axial fixierenden Rasteinrichtung (12, 13), mit einem koaxial zwischen den beiden Handstückteilen (2, 1), im gekuppelten Zustand der Handstückteile im Inneren des zweiten Handstückteiles (1) angeordneten Aufnahmeteil (15) für eine außermittig angeordnete Lampe (18), die zusammen mit einem korrespondierend dazu angeordneten, an das vordere Ende der Handstückanordnung führenden Lichtleiter (24) eine Beleuchtungseinrichtung bildet, wobei zur Stromversorgung der Lampe am Aufnahmeteil (15) und am demgegenüber ortsfesten ersten Handstückteil (2) an miteinander korrespondierenden Flächen (35) Kontaktmittel (26, 47, 49, 54, 55) angeordnet sind, die in jeder Drehstellung der Teile eine Spannungsübertragung gewährleisten, dadurch gekennzeichnet, daß das Aufnahmeteil (15) an dem dem Versorgungsschlauch (4) zugewandten ersten Handstückteil (2) frei drehbar gehaltert ist und daß das Aufnahmeteil (15) sowie das diesem gegenüberliegende zweite Handstückteil (1) an miteinander korrespondierenden Flächen der Kupplungsstelle Mittel (21, 22) enthalten, welche bei einem axialen Zusammenfügen der Teile (1, 2, 3) die axiale Bewegung in eine Drehbewegung des Aufnahmeteils (15) umsetzen, wodurch ein Positionieren der Lichtaustrittsstelle (19) der Lampe (19) am Aufnahmeteil (15) auf die Lichteintrittsstelle (23) des das Licht weiterführenden Lichtleiters (24) im zweiten Handstückteil (1) erfolgt.

2. Handstückanordnung nach Anspruch 1, dadurch gekennzeichnet, daß zur Positionierung der beiden Handstückteile (1, 2) am Aufnahmeteil (15) oder an dem gegenüberliegenden Handstückteil (1) wenigstens eine Gleitfläche (21, 22) vorhanden ist, gegen die ein am korrespondierenden anderen Teil (15, 1) angeordnetes Führungsglied (20) bei axialem Ankuppeln der beiden Handstückteile (1, 2) zur Anlage kommt.

3. Handstückanordnung nach Anspruch 2, dadurch gekennzeichnet, daß sich die Gleitfläche (21) über den gesamten Drehbereich erstreckt.

4. Handstückanordnung nach Anspruch 3, dadurch gekennzeichnet, daß auch als Führungsglied eine der Form der Gleitfläche (21) im Aufnahmeteil (15) angepaßte Gleitfläche (22) vorgesehen ist.

5. Handstückanordnung nach Anspruch 2, dadurch gekennzeichnet, daß, von einer Scheitellinie (20, 69) ausgehend, beidseitig um 180° verlaufend je eine Gleitfläche (21, 21a; 68, 68a) angeordnet ist.

6. Handstückanordnung nach einem der Ansprüche 2 bis 5, dadurch gekennzeichnet, daß die Gleitflächen (21, 22) wendelförmig verlaufend und stirnseitig des Aufnahmeteils (15) angeordnet sind.

7. Handstückanordnung nach Anspruch 6, dadurch gekennzeichnet, daß die Gleitflächen (21, 22) rechtwinkelig zur Drehachse angeordnet sind.

8. Handstückanordnung nach einem der Ansprüche 1 bis 7, dadurch gekennzeichnet, daß die Lichtaustrittsstelle (19) an der Gleitfläche (21) angeordnet ist.

9. Handstückanordnung nach einem der Ansprüche 1 bis 8, dadurch gekennzeichnet, daß am Umfang zwei gleiche, um 180° zueinander versetzte Gleitflächenpaare (75, 75a) vorhanden sind, die in ihrer Abwicklung einen spitzen Winkel (α) bilden, und daß zwei um 180° versetzte, vorzugsweise in den Scheitellinien angeordnete Lichtaustrittsstellen (73) vorgesehen sind (Figur 17).

10. Handstückanordnung nach einem der Ansprüche 1 bis 9, dadurch gekennzeichnet, daß bei einer Übertragung von Licht und wenigstens einem fluiden Medium, welches an der Kupplungsstelle ineinandergreifende Kupplungs- und Gegenkupplungsglieder in Form von vorstehenden Rohrstutzen (78, 79) im einen Handstückteil (3) und Buchsen (84, 85) im anderen Handstückteil (60) enthalten, Gleitflächen (80, 80a) vorhanden sind, die so ausgebildet sind, daß die Medienkupplungsglieder (78, 79) nach ihrer Positionierung einen axialen Hub (x) ausführen, der geringfügig größer ist als die Länge (y) der vorstehenden Kupplungsglieder (78, 79).

11. Handstückanordnung nach Anspruch 1, mit einem Antriebsmotor (2), dessen aus einer Stirnfläche (35) vorstehende Antriebswelle (38) von einem zylindrischen Rohrstutzen (27) umgeben ist, dadurch gekennzeichnet, daß das Aufnahmeteil (15) für die Lampe (18) stirnseitig vor dem Antriebsmotor (2) angeordnet ist, daß konzentrisch zum Rohrstutzen (27) an der Stirnfläche (35) des Motorgehäuses (25) Schleifringe (26) vorgesehen sind und auf dem Rohrstutzen (27) das Aufnahmeteil (15) für die Lampe (18) drehbar gehaltert ist, welches mit federnden, im montierten Zustand auf den Schleifringen (26) aufliegenden Kontaktgliedern (47) versehen ist.

12. Handstückanordnung nach Anspruch 11, dadurch gekennzeichnet, daß das Aufnahmeteil (15) auswechselbar am Rohrstutzen (27) gehaltert ist.

13. Handstückanordnung nach Anspruch 12, dadurch gekennzeichnet, daß das Aufnahmeteil (15) mittels Schraubhülse (28) am Rohrstutzen (27) abnehmbar gehaltert ist.

14. Handstückanordnung nach einem der Ansprüche 1 bis 13, dadurch gekennzeichnet, daß zur elektrischen Kontaktierung zwischen dem einen Handstückteil (2) und dem Aufnahmeteil (15) Schleifringe (26, 54) und mit diesen zusammenwirkende federnde Kontaktfahnen (47, 55) vorgesehen sind.

15. Handstückanordnung nach Anspruch 14, dadurch gekennzeichnet, daß die Schleifringe (26) konzentrisch und vorzugsweise in einer Ebene liegend stirnseitig an einem Isolierkörper (41) angeordnet sind.

16. Handstückanordnung nach Anspruch 14, dadurch gekennzeichnet, daß die Schleifringe (54) hintereinanderliegend am Umfang eines zylindrischen Isolierkörpers (52) angeordnet sind.

17. Handstückanordnung nach Anspruch 16, dadurch gekennzeichnet, daß der Isolierkörper (52) mittels Gewindering (53) axial fixierbar ist.

18. Handstückanordnung nach einem der Ansprüche 1 bis 17, dadurch gekennzeichnet, daß das Aufnahmeteil (15), die Lampe (18) sowie deren Anschlußkontakte (26, 48, 55) zu einer austauschbaren Baueinheit zusammengefaßt sind.

19. Handstückanordnung nach Anspruch 11, dadurch gekennzeichnet, daß einteilige Kontaktfahnen (47) vorgesehen sind, welche eine direkte Verbindung von der Lampe (18) zu den Schleifringen (26) herstellen.

20. Handstückanordnung nach einem der Ansprüche 14 bis 19, dadurch gekennzeichnet, daß zum Anschluß der elektrischen Zuführungsleitungen (44) an die Schleifringe (26) Steckkontakte (42, 43) vorgesehen sind.

21. Handstückanordnung nach Anspruch 14, dadurch gekennzeichnet, daß die Schleifringe (26) an einem Isolierkörper (41) befestigt sind, der mittels leicht lösbarer Befestigungsmittel (40) am Motorgehäuse (25) gehalten ist.

22. Handstückanordnung nach einem der Ansprüche 1 bis 21, dadurch gekennzeichnet, daß das Lampenaufnahmeteil (15) eine radiale Durchbrechung (17) zum Einlegen und Entnehmen der Lampe (18) enthält.

23. Handstückanordnung nach einem der Ansprüche 1 bis 22, dadurch gekennzeichnet, daß eine Lampe (18) mit parallelen, die Kontaktierung enthaltenden Schlüsselflächen verwendet ist.

**Claims**

1. Dental handpiece arrangement having a first handpiece part (2), which is connected to a supply tube (4), and a second handpiece part (1), which, relative thereto, is rotatable freely, that is, over 360°, about its longitudinal axis and can be easily separated therefrom, having guide elements (7, 25) which guarantee free rotatability of the second handpiece part (1), having a stop device (12, 13) which axially fixes the handpiece parts in the coupled state, having a receiving part (15), which is arranged coaxially between the two handpiece parts (2, 1) in the coupled state of the handpiece parts inside the second handpiece part (1), for an eccentrically arranged lamp (18) which, together with a light guide (24) arranged in a manner corresponding thereto and leading to the front end of the handpiece arrangement, forms an illuminating device, in which, for the purpose of supplying current to the lamp, on the receiving part (15) and on the first handpiece part (2), which is fixed relative thereto, there are arranged on corresponding surfaces (35) contact means (26, 47, 49, 54, 55) which guarantee voltage transmission in each position of rotation of the parts, characterised in that the receiving part (15) is supported in a freely rotatable manner on the first handpiece part (2) which faces the supply tube (4) and in that both the receiving part (15) and the second handpiece part (1) lying opposite it contain, on corresponding surfaces of the coupling point, means (21, 22) which when the parts (1, 2, 3) are joined axially convert the axial movement into a rotary movement of the receiving part (15), whereby a positioning of the light exit point (19) of the lamp (19) on the receiving part (15) in relation to the light entry point (23) of the light guide (24) conducting the light further is effected in the second handpiece part (1).

2. Handpiece arrangement according to claim 1, characterised in that in order to position the two handpiece parts (1, 2), there is provided on the receiving part (15) or on the opposite handpiece part (1), at least one slide face (21, 22) against which a guide element (20) which is arranged on the other corresponding part (15, 1) comes into contact when axially coupling the two handpiece parts (1, 2).

3. Handpiece arrangement according to claim 2, characterised in that the slide face (21) extends over the whole region of rotation.

4. Handpiece arrangement according to claim 3, characterised in that a slide face (22) which is adapted to the form of the slide face (21) in the receiving part (15) is also provided as a guide element.

5. Handpiece arrangement according to claim 2, characterised in that, starting from an apex line (20, 69), there is arranged on both sides a slide face (21, 21a; 68, 68a) extending in each case around 180°.

6. Handpiece arrangement according to one of the claims 2 to 5, characterised in that the slide faces (21, 22) are arranged such that they extend in the form of a helix and on the front side of the receiving part (15).

7. Handpiece arrangement according to claim 6, characterised in that the slide faces (21, 22) are arranged at right angles to the axis of rotation.

8. Handpiece arrangement according to one of the claims 1 to 7, characterised in that the light exit point (19) is arranged on the slide face (21).

9. Handpiece arrangement according to one of the claims 1 to 8, characterised in that on the periphery there are two identical pairs of slide faces (75, 75a) which are offset by 180° with respect to each other and which form in their development an acute angle (α) and in that there are provided two light exit points (73), which are offset by 180° and are preferably arranged in the apex lines (Figure 17).

10. Handpiece arrangement according to one of the claims 1 to 9, characterised in that, for transmission of light and at least one fluid medium, the latter being contained by coupling and countercoupling elements which interlock at the coupling point and are in the form of projecting tube connection pieces (78, 79) in one handpiece part (3) and bushings (84, 85) in the other handpiece part (60), there are provided slide faces (80, 80a) which are developed so that the media coupling elements (78, 79) according to their positioning execute an axial stroke (x) which is slightly greater than the length (y) of the projecting coupling elements (78, 79).

11. Handpiece arrangement according to claim 1, having a drive motor (2), the drive shaft (38) of which projecting from a front surface (35) is surrounded by a cylindrical tube connection piece (27), characterised in that the receiving part (15) for the lamp (18) is arranged on the front side in front of the drive motor (2), in that slip rings (26) are provided concentric to the tube connection piece (27) on the front surface (35) of the motor housing (25) and the receiving part (15) for the lamp (18) is rotatably supported on the tube connection piece (27), the receiving part being provided with resilient contact elements (47) which in the assembled state are supported on the slip rings (26).

12. Handpiece arrangement according to claim 11, characterised in that the receiving part (15) is exchangeably mounted on the tube connection piece (27).

13. Handpiece arrangement according to claim 12, characterised in that the receiving part (15) is removably mounted by means of screw sleeve (28) on the tube connection piece (27).

14. Handpiece arrangement according to one of the claims 1 to 13, characterised in that slip rings (26, 54) and, cooperating with these, resilient contact lugs (47, 55) are provided for the purpose of electrical contacting between the one handpiece part (2) and the receiving part (15).

15. Handpiece arrangement according to claim 14, characterised in that the slip rings (26) are arranged concentrically and preferably lying in one plane on the front side of an insulating body (41).

16. Handpiece arrangement according to claim 14, characterised in that the slip rings (54) are arranged lying one behind the other on the periphery of a cylindrical insulating body (52).

17. Handpiece arrangement according to claim 16, characterised in that the insulating body (52) can be fixed axially by means of threaded ring (53).

18. Handpiece arrangement according to one of the claims 1 to 17, characterised in that the receiving part (15), the lamp (18) and also the latter's connection contacts (26, 48, 55) are combined to form an interchangeable unit.

19. Handpiece arrangement according to claim 11, characterised in that one-part contact lugs (47) are provided, which lugs establish a direct connection of the lamp (18) with the slip rings (26).

20. Handpiece arrangement according to one of the claims 14 to 19, characterised in that plug-in contacts (42, 43) are provided for the purpose of connecting the electrical supply lines (44) to the slip rings (26).

21. Handpiece arrangement according to claim 14, characterised in that the slip rings (26) are secured to an insulating body (41) which is supported on the motor housing (25) by means of easily detachable securing means (40).

22. Handpiece arrangement according to one of the claims 1 to 21, characterised in that the lamp receiving part (15) contains a radial opening (17) for the insertion and removal of the lamp (18).

23. Handpiece arrangement according to one of the claims 1 to 22, characterised in that a lamp (18) with parallel key faces containing the contacting is used.

### Revendications

1. Dispositif formant pièce à main de dentisterie comportant une première partie (2) de la pièce à main, raccordée à un tuyau d'alimentation (4), et une seconde partie (1) de la pièce à main, pouvant tourner librement, c'est-à-dire sur 360°, par rapport à la première partie de la pièce à main, autour de son axe longitudinal et pouvant être aisément séparée de cette partie, des organes de guidage (7, 25) garantissant la libre mobilité en rotation de la seconde partie (1) de la pièce à main, un dispositif d'encliquetage (12, 13) bloquant axialement à l'état accouplé les parties de la pièce à main, une partie de réception (15), qui est disposée coaxialement entre les deux parties (2, 1) de la pièce à main, lorsque ces dernières sont à l'état accouplé, à l'intérieur de la seconde partie (1) de la pièce à main et sert à loger une lampe (18) disposée d'une manière excentrée et formant un dispositif d'éclairage en association avec un guide de lumière (24) disposé en correspondance avec cette lampe et aboutissant au niveau de l'extrémité avant du dispositif formant pièce à main, et dans lequel pour l'alimentation en courant de la lampe, il est prévu sur des surfaces (35), qui se correspondent, dans la partie de réception (15) et dans la première partie (2) de la pièce à main, fixe par rapport à la partie de réception, des moyens de contact (26, 47, 49, 54, 55), qui garantissent une transmission de la tension dans chaque position de rotation desdites parties, caractérisé par le fait que la partie de réception (15) est maintenue de manière à pouvoir tourner librement sur la première partie (2) de la pièce à main tournée vers le tuyau d'alimentation (4), et que la partie de réception (15) ainsi que la seconde partie (1) de la pièce à main, située en vis-à-vis de cette partie de réception, contiennent, sur des surfaces, qui se correspondent réciproquement, de la zone d'accouplement, des moyens (21, 22) qui, lors de la réunion axiale des parties (1, 2, 3), convertissent le déplacement axial en un mouvement de rotation de la partie de réception (15), un positionnement de la zone (19) de sortie de la lumière de la lampe (19) dans la partie de réception (15) étant réalisé sur la zone (23) d'entrée de la lumière du guide de lumière (24) qui retransmet la lumière et est situé dans la seconde partie (1) de la pièce à main.

2. Dispositif formant pièce à main suivant la revendication 1, caractérisé par le fait que pour le positionnement des deux parties (1, 2) de la pièce à main, il est prévu sur la partie de réception (15) ou sur la partie opposée (1) de la pièce à main, au moins une surface de glissement (21, 22), contre laquelle un organe de guidage (20), situé sur l'autre partie correspondante (15, 1), vient s'appliquer lors d'un accouplement axial des deux parties (1, 2) de la pièce à main.

3. Dispositif formant pièce à main suivant la revendication 2, caractérisé par le fait que la surface de glissement (21) s'étend sur toute la plage de rotation.

4. Dispositif formant pièce à main suivant la revendication 3, caractérisé par le fait qu'il est également prévu, comme organe de guidage, une surface de glissement (22) adaptée à la forme de la surface de glissement (21) située sur la partie de réception (15).

5. Dispositif formant pièce à main suivant la revendication 2, caractérisé par le fait qu'une surface respective de glissement (21, 21a; 68, 68a) s'étend à partir d'une ligne sommitale (20, 69), des deux côtés sur 180°.

6. Dispositif formant pièce à main suivant l'une des revendications 2 à 5, caractérisé par le fait que les surfaces de glissement (21, 22) sont disposées de manière à s'étendre sous une forme hélicoïdale, sur la face frontale de la partie de réception (15).

7. Dispositif formant pièce à main suivant la revendication 6, caractérisé par le fait que les surfaces de glissement (21, 22) sont disposées perpendiculairement à l'axe de rotation.

8. Dispositif formant pièce à main suivant l'une des revendications 1 à 7, caractérisé par le fait que la zone (19) de sortie de la lumière est située dans la surface de glissement (21).

9. Dispositif formant pièce à main suivant l'une des revendications 1 à 8, caractérisé par le fait que sur le pourtour se trouvent disposés deux couples identiques (75, 75a) de surface de glissement, qui décalés l'un par rapport à l'autre et forment selon une projection en plan, un angle aigu (α) et qu'il est prévu deux zones (73) de sortie de la lumière décalées de 180° et situées de préférence au niveau des lignes sommitales (figure 17).

10. Dispositif formant pièce à main suivant l'une des revendications 1 à 9, caractérisé par le fait que dans le cas d'une transmission de la lumière et d'au moins un milieu fluide il est prévu, au niveau de la zone d'accouplement d'un organe d'accouplement et d'un organe d'accouplement antagoniste de transmission engrenant réciproquement et réalisés sous la forme de tubulures saillantes (78, 79) dans une partie (3) de la pièce à main et de douilles (84, 85) dans l'autre partie (60) de la pièce à main, des surfaces de glissement (80, 80a) agencées de telle sorte que les organes d'accouplement (78, 79) exécutent, après leur positionnement, un déplacement sur une course axiale (x), qui est légèrement supérieur à la longueur (y) des organes d'accouplement saillants (78, 79).

11. Dispositif formant pièce à main suivant la revendication 1, comportant un moteur d'entraînement (2), dont l'arbre d'entraînement (38), qui fait saillie sur une face frontale (35), est entouré par une tubulure cylindrique (27), caractérisé par le fait que la partie de réception (15) logeant la lampe (18) est disposée frontalement en avant du moteur d'entraînement (2), que des bagues de contact (26) sont prévues, concentriquement à la tubulure (27), sur la surface frontale (35) du carter (25) du moteur et que l'élément de réception (15), qui sert à loger la lampe (18) et est pourvu d'organes élastiques de contact (47) s'appliquant à l'état monté sur les bagues de contact (26), est montée de manière à pouvoir tourner sur la tubulure (27).

12. Dispositif formant pièce à main suivant la revendication 11, caractérisé par le fait que la partie de réception (15) est maintenue, de manière à pouvoir être remplacée, sur la tubulure (27).

13. Dispositif formant pièce à main suivant la revendication 12, caractérisé par le fait que la partie de réception (15) est maintenue de façon amovible sur la tubulure (27) au moyen d'une douille vissable (28).

14. Pièce à main suivant l'une des revendications 1 à 13, caractérisée par le fait que pour l'établissement du contact électrique entre une partie (2) de la pièce à main et la partie de réception (15), il est prévu des bagues de contact (26, 54) et des languettes élastiques de contact (47, 55) coopérant avec ces bagues.

15. Dispositif formant pièce à main suivant la revendication 14, caractérisé par le fait que les bagues coulissantes (26) sont disposées d'une manière concentrique et de préférence frontalement dans un plan contre un corps isolant (41).

16. Dispositif formant pièce à main suivant la revendication 14, caractérisé par le fait que les bagues de contact (54) sont disposées les unes derrière les autres sur le pourtour d'un corps isolant cylindrique (52).

17. Dispositif formant pièce à main suivant la revendication 16, caractérisé par le fait que le corps isolant (52) peut être fixé axialement au moyen d'une bague filetée (53).

18. Dispositif formant pièce à main suivant l'une des revendications 1 à 17, caractérisé par le fait que la partie de réception (15), la lampe (18) ainsi que ses organes de raccordement (26, 48, 55) sont rassemblés pour former un module unitaire interchangeable.

19. Dispositif formant pièce à main suivant la revendication 11, caractérisé par le fait qu'il est prévu des languettes de contact (47) monobloc, qui établissent une liaison directe entre la lampe (18) et les bagues de contact (26).

20. Dispositif formant pièce à main suivant l'une des revendications 14 à 19, caractérisé par le fait que pour le raccordement des lignes d'alimentation électrique (44) il est prévu des contacts enfichables (42, 43) sur les bagues de contact (26).

21. Dispositif formant pièce à main suivant la revendication 15, caractérisé par le fait que les bagues de contact (26) sont fixées sur un corps isolant (41), qui est maintenu sur le carter (25) du moteur à l'aide de moyens de fixation (40) pouvant être aisément détachés.

22. Dispositif formant pièce à main suivant l'une des revendications 1 à 21, caractérisé par le fait que la partie (15) de réception de la lampe comporte une ouverture radiale (17) permettant d'insérer et de retirer la lampe (18).

23. Dispositif formant pièce à main suivant l'une des revendications 1 à 22, caractérisé par le fait qu'on utilise une lampe (28) comportant des surfaces parallèles de clé contenant les organes de contact.

FIG 1

FIG 2

FIG 3

EP 0 143 985 B1

EP 0 143 985 B1

FIG 4

FIG 5

FIG 7

FIG 6

FIG 8

EP 0 143 985 B1

FIG 9

FIG 10

FIG 11

FIG 12

FIG 13

FIG 15

FIG 14

FIG 16

FIG 17

FIG 18

EP 0 143 985 B1